# EUROPEAN PATENT APPLICATION

(11) **EP 4 835 635 A1**
(43) Date of publication of application: **04.11.2026**
(21) Application number: 24910984.4
(22) Date of filing: 20.12.2024
(51) Int. Cl.: G06F 3/0481

(54) **INFORMATION DISPLAY METHOD AND APPARATUS, DEVICE, AND STORAGE MEDIUM**

(30) Priority: 28.12.2023 CN 202311845286
(71) Applicant: Beijing Zitiao Network Technology Co., Ltd., Beijing 100190 (CN)
(72) Inventor: ZHAO, Yuxuan, Beijing 100028 (CN); MA, Ke, Beijing 100028 (CN); SHU, Siqi, Beijing 100028 (CN)
(74) Representative: Grünecker Patent- und Rechtsanwälte PartG mbB
(86) International application number: PCT/CN2024/141156
(87) International publication number: WO 2025/140056

(57) **Abstract**

Provided are an information display method and apparatus, and a device and a storage medium, which relate to the field of computer technologies. The method includes: displaying a first conversation message containing a first virtual resource in a conversation page of a preset conversation; displaying a first control at a first associated position of the first conversation message, wherein the control is used for triggering the sending of a second conversation message containing a second virtual resource in the preset conversation, a target preset attribute of the second virtual resource being identical to a target preset attribute of the first virtual resource, the target preset attribute including a target interaction type corresponding to a virtual resource, and the target interaction type being associated with an acquisition mode of a corresponding virtual resource; and displaying a virtual resource setting page in response to a trigger operation for the first control, wherein the page is configured to display configuration information of the second virtual resource corresponding to the target preset attribute.

## Description

The present application claims priority to Chinese Patent Application No. 202311845286.9, filed with the China National Intellectual Property Administration on December 28, 2023, and entitled "INFORMATION DISPLAY METHOD AND APPARATUS, DEVICE, AND STORAGE MEDIUM", the disclosure of which is incorporated herein by reference in its entirety.

### TECHNICAL FIELD

Embodiments of the present disclosure relate to the field of computer technologies, and in particular, to an information display method, an apparatus, a device, and a storage medium.

### BACKGROUND

With the rapid development of information technologies and the popularization of the mobile Internet, a user may interact based on virtual resources such as coupons or red envelopes through the Internet, for example, perform related interactions such as distributing virtual resources and acquiring virtual resources.

### SUMMARY

Embodiments of the present disclosure provide an information display method, an apparatus, a device, and a storage medium.

In a first aspect, embodiments of the present disclosure provide an information display method, including:
displaying a first conversation message in a conversation page of a preset conversation, wherein the first conversation message includes a first virtual resource;
displaying a first control at a first associated position of the first conversation message, wherein the first control is configured to trigger sending of a second conversation message in the preset conversation, the second conversation message includes a second virtual resource, a target preset attribute of the second virtual resource is identical to a target preset attribute of the first virtual resource, the target preset attribute includes a target interaction type corresponding to a virtual resource, and the target interaction type is associated with an acquisition mode of the corresponding virtual resource; and
displaying a virtual resource setting page in response to a trigger operation for the first control, wherein the virtual resource setting page is configured to display configuration information of the second virtual resource corresponding to the target preset attribute.

In a second aspect, embodiments of the present disclosure further provide an information display apparatus, including:
a first message display module, configured to display a first conversation message in a conversation page of a preset conversation, wherein the first conversation message includes a first virtual resource;
a first control display module, configured to display a first control at a first associated position of the first conversation message, wherein the first control is configured to trigger sending of a second conversation message in the preset conversation, the second conversation message includes a second virtual resource, a target preset attribute of the second virtual resource is identical to a target preset attribute of the first virtual resource, the target preset attribute includes a target interaction type corresponding to a virtual resource, and the target interaction type is associated with an acquisition mode of the corresponding virtual resource; and
a setting page display module, configured to display a virtual resource setting page in response to a trigger operation for the first control, wherein the virtual resource setting page is configured to display configuration information of the second virtual resource corresponding to the target preset attribute.

In a third aspect, embodiments of the present disclosure further provide an electronic device, including:
one or more processors; and
a storage, configured to store one or more programs,
wherein the one or more programs, when executed by the one or more processors, cause the one or more processors to implement the information display method provided in embodiments of the present disclosure.

In a fourth aspect, embodiments of the present disclosure further provide a storage medium including computer-executable instructions, wherein the computer-executable instructions, when executed by a computer processor, are configured to perform the information display method provided in embodiments of the present disclosure.

According to the information display solution provided in embodiments of the present disclosure, a first conversation message including a first virtual resource is displayed in a conversation page of a preset conversation, and a first control is displayed at a first associated position of the first conversation message, wherein the first control is configured to trigger sending of a second conversation message in the preset conversation, the second conversation message includes a second virtual resource, a target preset attribute of the second virtual resource is identical to a target preset attribute of the first virtual resource, the target preset attribute includes a target interaction type corresponding to a virtual resource, and the target interaction type is associated with an acquisition mode of the corresponding virtual resource; and a virtual resource setting page is displayed in response to a trigger operation for the first control, wherein the virtual resource setting page is configured to display configuration information of the second virtual resource corresponding to the target preset attribute.

### BRIEF DESCRIPTION OF THE DRAWINGS

The above and other features, advantages, and aspects of embodiments of the present disclosure will become more apparent in conjunction with the drawings and with reference to the following specific implementations. Throughout the drawings, the same or similar reference numerals denote the same or similar elements. It should be understood that the drawings are schematic, and that parts and elements are not necessarily drawn to scale.
Fig. 1 is a schematic flowchart of an information display method provided in embodiments of the present disclosure;
Fig. 2 is a schematic diagram of interface interaction of an information display method provided in embodiments of the present disclosure;
Fig. 3 is a schematic diagram of interface interaction of an information display method provided in embodiments of the present disclosure;
Fig. 4 is a schematic flowchart of another information display method provided in embodiments of the present disclosure;
Fig. 5 is a schematic diagram of interface interaction of an information display method provided in embodiments of the present disclosure;
Fig. 6 is a schematic diagram of a structure of an information display apparatus provided in embodiments of the present disclosure; and
Fig. 7 is a schematic diagram of a structure of an electronic device provided in embodiments of the present disclosure.

### DETAILED DESCRIPTION OF EMBODIMENTS

Embodiments of the present disclosure will be described in more detail below with reference to the drawings. Although certain embodiments of the present disclosure are shown in the drawings, it should be understood that the present disclosure may be implemented in various forms and should not be construed as being limited to the embodiments set forth herein; on the contrary, these embodiments are provided for a more thorough and complete understanding of the present disclosure. It should be understood that the drawings and embodiments of the present disclosure are only for exemplary purposes and are not intended to limit the protection scope of the present disclosure.

It should be understood that various steps described in method implementations of the present disclosure may be performed in different orders and/or in parallel. In addition, the method implementations may include additional steps and/or omit the execution of the illustrated steps. The scope of the present disclosure is not limited in this regard.

As used herein, the term "include/comprise" and variations thereof are open-ended inclusions, that is, "include/comprise but not limited to". The term "based on" is "at least partially based on". The term "one embodiment" means "at least one embodiment"; the term "another embodiment" means "at least one other embodiment"; and the term "some embodiments" means "at least some embodiments". Related definitions of other terms will be given in the description below.

It should be noted that concepts such as "first" and "second" mentioned in the present disclosure are only used to distinguish different apparatuses, modules, or units, and are not used to limit an order or interdependence of functions performed by these apparatuses, modules, or units.

It should be noted that modifications of "one" and "a plurality of" mentioned in the present disclosure are schematic rather than restrictive, and those skilled in the art should understand that unless otherwise clearly indicated in the context, they should be understood as "one or more".

The names of messages or information exchanged between a plurality of apparatuses in the implementations of the present disclosure are only for illustrative purposes, and are not intended to limit the scope of these messages or information.

It may be understood that before the use of the technical solutions disclosed in embodiments of the present disclosure, the user shall be informed of the type, range of use, use scenarios, etc., of personal information involved in the present disclosure and the authorization of the user shall be obtained in an appropriate manner in accordance with relevant laws and regulations.

For example, in response to reception of an active request from a user, prompt information is sent to the user to clearly inform the user that the requested operation will require access to and use of personal information of the user. In this way, the user may independently choose, based on the prompt information, whether to provide the personal information to software or hardware, such as an electronic device, an application, a server, or a storage medium, that performs the operations of the technical solutions of the present disclosure.

As an optional but non-limiting implementation, in response to the reception of the active request from the user, the prompt information may be sent to the user in the form of, for example, a pop-up window, in which the prompt information may be presented in text. In addition, the pop-up window may also include a selection control for the user to choose whether to "agree" or "disagree" to provide the personal information to the electronic device.

It may be understood that the above process of notifying the user and acquiring the authorization of the user is only illustrative and does not limit the implementations of the present disclosure, and other manners that satisfy the relevant laws and regulations may also be applied in the implementations of the present disclosure.

It may be understood that the data involved in the technical solution (including but not limited to the data itself, acquisition or use of the data) shall comply with requirements of corresponding laws, regulations, and related provisions.

In the related art, a user that distributes a virtual resource may set attributes such as the number of resources and the number of acquiring users in a page and send the virtual resource to a user side that may acquire the virtual resource, an acquisition control of the virtual resource is displayed in a page of the user side acquiring the virtual resource, and the user may acquire the corresponding virtual resource by clicking the acquisition control.

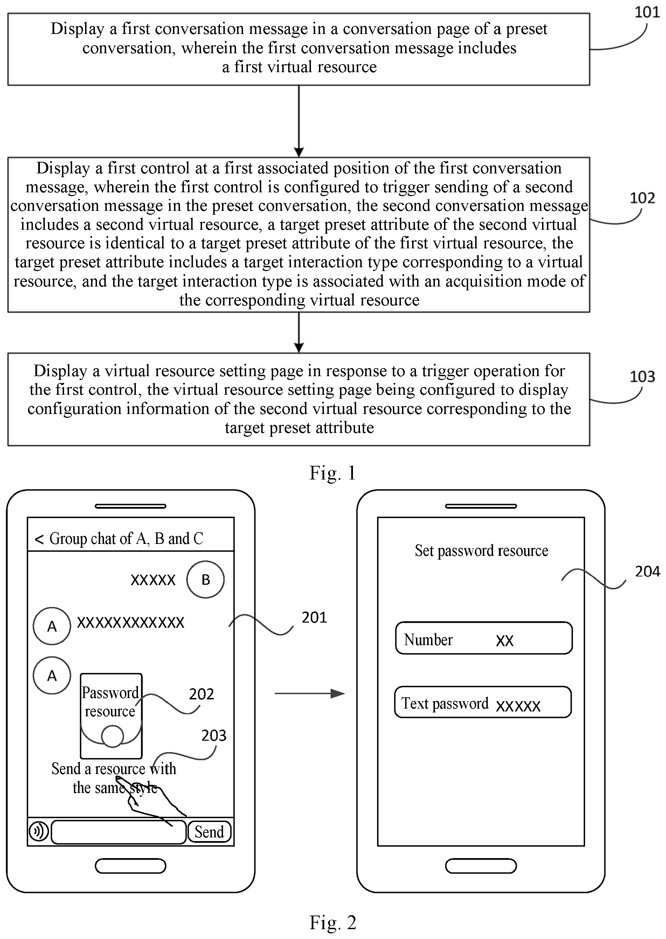

Fig. 1 is a schematic flowchart of an information display method provided in embodiments of the present disclosure. The embodiment of the present disclosure is applicable to a case of information display. The method may be performed by an information display apparatus, which may be implemented in the form of software and/or hardware. Optionally, the method is implemented by an electronic device. The electronic device may be a mobile terminal, such as a mobile phone, a smart watch, a tablet computer, or a personal digital assistant, or may be a device, such as a personal computer (PC) or a server.

As shown in Fig. 1, the method includes:
step 101: a first conversation message is displayed in a conversation page of a preset conversation, wherein the first conversation message includes a first virtual resource.

In the embodiment of the present disclosure, the preset conversation may be a one-to-one conversation or a multi-user conversation, which is not specifically limited. Participants in the preset conversation may include a first user and a second user, the first user may be a sender of the first conversation message, and a user who is currently viewing the conversation page may be the first user or may be a second user different from the first user. The virtual resource may include, for example, a red envelope or a coupon. The first virtual resource is a virtual resource included in the first conversation message, and the first user may set the first virtual resource and distribute the first virtual resource to the preset conversation in the form of the first conversation message.

Step 102: a first control is displayed at a first associated position of the first conversation message, wherein the first control is configured to trigger sending of a second conversation message in the preset conversation, the second conversation message includes a second virtual resource, a target preset attribute of the second virtual resource is identical to a target preset attribute of the first virtual resource, the target preset attribute includes a target interaction type corresponding to a virtual resource, and the target interaction type is associated with an acquisition mode of the corresponding virtual resource.

Exemplarily, the first associated position may be a position associated with a display position of the first conversation message, for example, a distance between the first associated position and the display position of the first conversation message is less than a first preset distance threshold, wherein the first associated position may be a center position of a display area in which the first control is located, the display position of the first conversation message may be a center position of a display area in which the first conversation message is located, and the distance between the first associated position and the display position of the first conversation message may be a vertical distance in a preset direction (such as a horizontal direction, a vertical direction, or a linear connection direction, etc.). Specifically, the first associated position may be directly below the display area in which the first conversation message is located.

Exemplarily, the first virtual resource is configured with a plurality of preset attributes, which may include, for example, an interaction type, an associated theme, and a resource attribute corresponding to the virtual resource. The second conversation message may be sent in the preset conversation by triggering the first control, the second conversation message includes the second virtual resource, the target preset attribute of the second virtual resource is identical to the target preset attribute of the first virtual resource, and the target preset attribute is at least one of the preset attributes. Specifically, the target preset attribute includes the target interaction type corresponding to the virtual resource, that is, an interaction type of the first virtual resource is identical to an interaction type of the second virtual resource. In this way, a setting operation for the interaction type of the virtual resource when the second conversation message is sent may be saved, and the distributing efficiency may be improved. The target interaction type is associated with the acquisition mode of the corresponding virtual resource, that is, virtual resources corresponding to different target interaction types have different acquisition modes. The target interaction type may include a password type and/or an image type, and may also include other interaction types, such as a message trigger type (a corresponding acquisition mode may be to trigger a conversation message including a virtual resource by means of clicking or the like), etc.

Exemplarily, the first control may specifically be a control including prompt text information, a control including a prompt effect, etc., and specific content is not limited. For example, it may be "Send one with the same style", "Send one by the way", or "Send one more", etc.

Optionally, a sending user of the first conversation message and a sending user of the second conversation message are the same or different. If they are the same, for example, both of them are the first user, the first user may send the second virtual resource having the same target preset attribute as the first virtual resource that has already been sent by the first user, thereby improving the sending efficiency of a subsequent virtual resource. If they are different, for example, they are the first user and the second user respectively, the second user may send the second virtual resource having the same target preset attribute as the first virtual resource sent by other users in the preset conversation, thereby improving the sending efficiency of the virtual resource.

Step 103: a virtual resource setting page is displayed in response to a trigger operation for the first control, wherein the virtual resource setting page is configured to display configuration information of the second virtual resource corresponding to the target preset attribute.

Exemplarily, the configuration information of the second virtual resource may include information for configuring the second virtual resource corresponding to the target interaction type, and a specific display form may include an attribute item and a corresponding attribute representation, the attribute item may include, for example, the number of virtual resources.

Fig. 2 is a schematic diagram of interface interaction of an information display method provided in embodiments of the present disclosure. As shown in Fig. 2, assuming that a target conversation is a group chat, participants include user A, user B, and user C, a first conversation message 202 is displayed in a conversation page 201 of a preset conversation, the first conversation message 202 includes a first virtual resource, and assuming that a target interaction type of the first virtual resource is a password type, as shown in a password resource in the figure, the first conversation message 202 is sent by user A, that is, the password resource is sent by user A, and a current user is assumed to be user B, a first control 203 may be displayed below the first conversation message 202, as shown in a text prompt "Send a resource with the same style" in the figure, user B may enter a virtual resource setting page 204 by triggering the first control 203, the virtual resource setting page 204 is configured to display configuration information of a second virtual resource corresponding to the password type, as shown in the figure, the number and a text password, and then the sending of a second conversation message including the second virtual resource of the password type in the preset conversation is triggered, which implements sending a resource with the same style in the preset conversation, and reduces the trigger entry for searching for a resource distributing event and related operations such as setting resources, and improves the resource sending efficiency.

According to the information display method provided in embodiments of the present disclosure, a first conversation message including a first virtual resource is displayed in a conversation page of a preset conversation, and a first control is displayed at a first associated position of the first conversation message, wherein the first control is configured to trigger sending of a second conversation message in the preset conversation, the second conversation message includes a second virtual resource, a target preset attribute of the second virtual resource is identical to a target preset attribute of the first virtual resource, the target preset attribute includes a target interaction type corresponding to a virtual resource, and the target interaction type is associated with an acquisition mode of the corresponding virtual resource; and a virtual resource setting page is displayed in response to a trigger operation for the first control, wherein the virtual resource setting page is configured to display configuration information of the second virtual resource corresponding to the target preset attribute. With the above technical solution, when there is a conversation message including a virtual resource in a conversation, the first control is displayed at an associated position of the conversation message, and the virtual resource setting page that is configured to display the configuration information of the second virtual resource corresponding to the target preset attribute may be triggered by the first control to be displayed, and a new conversation message including a new virtual resource having the same target preset attribute as the virtual resource may also be triggered to be sent, thereby improving the sending efficiency of the virtual resource, enriching interaction manners based on the virtual resource, and improving the interaction effect.

In some embodiments, the target preset attribute further includes at least one of an associated theme and a resource attribute corresponding to the virtual resource. In this way, rich reuse dimensions of the preset attribute may be supported, which makes the distribution of virtual resources more flexible while improving the distributing efficiency.

In some embodiments, the interaction type includes at least one of a password type, an image type, and a control trigger type, an acquisition mode associated with the password type includes inputting password information, an acquisition mode associated with the image type includes inputting an image, an acquisition mode of the control trigger type includes triggering a control, and a type of the password information includes a text information type and/or a voice information type. Specifically, an acquisition mode corresponding to the text information type may be to acquire the virtual resource by inputting a password in the form of text information; an acquisition mode corresponding to the voice information type may be to acquire the virtual resource by inputting a password in the form of voice information. The acquisition mode associated with the image type is to input an image, which may specifically be to take an image by a camera of an electronic device for image input, or may be to select an image by calling a local album of the electronic device to input the image after obtaining full authorization of the user, and the input image may be a photo and/or a video. An acquisition mode corresponding to the control trigger type may be to acquire the virtual resource by triggering a conversation message including the virtual resource (the conversation message itself is used as the triggered control, or a triggerable control is further displayed after the conversation message is triggered). Optionally, different types of password information may also correspond to different interaction types, for example, the password type includes two sub-types, a text password type and a voice password type.

Exemplarily, the associated theme may include, for example, a blessing theme, a holiday theme, a memorial day theme, or an event theme.

In some embodiments, the resource attribute includes at least one of: a number of the virtual resources, a threshold number of users acquiring virtual resources, and an associated image of the virtual resources. In this way, rich reuse dimensions of the preset attribute may be supported, which makes the distribution of virtual resources more flexible while improving the distributing efficiency.

For example, the number of the virtual resources may be a resource amount; the threshold number of users acquiring virtual resources may be a maximum number of users who may receive the resources; the associated image of the virtual resources may be a cover image or a background image of the virtual resources, such as a resource cover or a resource background.

In some embodiments, the acquisition mode is associated with an acquisition condition, and the target preset attribute further includes the acquisition condition, wherein the acquisition condition corresponding to the password type includes that input target password information matches preset password information; and/or the acquisition condition corresponding to the image type includes that an input target image satisfies at least one of the following: a target condition, an associated preset theme, and inclusion of a target material. In this way, rich reuse dimensions of the preset attribute may be supported, which makes the distribution of virtual resources more flexible while improving the distributing efficiency.

Exemplarily, the acquisition condition may be represented as preset password information, a target condition, a preset theme, and a target material, etc. The representation of the acquisition condition may be set by the sender of the first conversation message when the first virtual resource is distributed. The preset password information indicates content of the target password information input when the virtual resource is acquired and/or associated content corresponding to the content of the target password information input. In this way, the interaction effect of interaction based on the virtual resource may be improved.

Exemplarily, taking a voice password as an example, if a first user wants a second user to say "May you be prosperous" when receiving a voice password resource, the preset password information may be set to "May you be prosperous", and the second user may receive the voice password resource distributed by the first user by saying "May you be prosperous". Optionally, the associated content may include a question, for example, if the first user wants the second user to answer the answer to the question "Say your favorite animal" when receiving the voice password resource, the preset password information may be set to "Say your favorite animal", and the second user may receive the voice password resource distributed by the first user by saying, for example, "rabbit".

Exemplarily, the target condition may be understood as a condition that the input image needs to meet, for example, a requirement for image content, such as "Send a photo of your face" or "Take a photo of the scenery", and when acquiring the virtual resource, the user may take or select an image that meets the requirement based on the target condition, so as to acquire the virtual resource. The preset theme may be understood as that the image content of the input image shall conform to the theme. The target material may be understood as a material that shall be included in the input image.

In some embodiments, displaying the first control at the first associated position of the first conversation message includes: displaying the first control at the first associated position of the first conversation message, in response to acquiring the first virtual resource based on the first conversation message. In this way, the first control is displayed after the first virtual resource is received, which enhances the prompt effect of the target control. Optionally, a user who acquires the first virtual resource may be identical to or different from the sending user of the first conversation message, that is, the user may receive the virtual resource distributed by the user, or may receive the virtual resource distributed by other users.

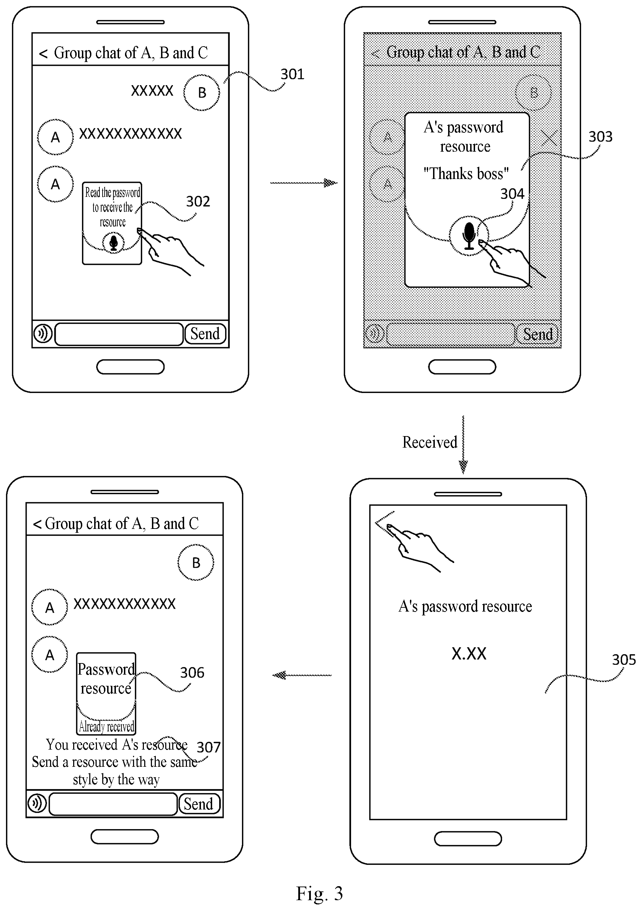

Fig. 3 is a schematic diagram of interface interaction of an information display method provided in embodiments of the present disclosure. As shown in Fig. 3, a first conversation message 302 including a voice password resource sent by user A is displayed in a conversation page 301 of a preset conversation, and in response to user B triggering the first conversation message 302, a virtual resource acquisition page 303 (a resource claiming page) is displayed, a first input control 304 is displayed in the virtual resource acquisition page 303, for example, the first input control 304 is in the style of a microphone, user B may input target voice information by long pressing the first input control 304, and the input is completed after the hand is released. If the target voice information matches a preset voice password, the resource is successfully claimed, and an acquisition result page 305 is displayed; in response to a return operation of the conversation page input by user B, the conversation page is displayed, a first conversation message 306 in which a state of the first virtual resource is changed is displayed in the conversation page, for example, the phrase "Already received" in the figure are added, and a first control 307 is displayed, as shown in the figure "You received the resource from A, send one with the same style by the way".

In some embodiments, the configuration information of the second virtual resource includes an attribute representation of a target attribute item, and the method further includes: displaying the attribute representation of the target attribute item in the virtual resource setting page, wherein the attribute representation of the target attribute item is determined based on the target preset attribute of the first virtual resource; and displaying the second conversation message in the conversation page in response to a preset distribution instruction, wherein the second virtual resource is generated based on the attribute representation of the target attribute item. In this way, the attribute representation determined based on the target preset attribute of the first virtual resource is displayed in the virtual resource setting page, which reduces the manual configuration of the user and improves the configuration efficiency of the virtual resource to be sent. After the preset distribution instruction is received, the second conversation message is sent and displayed in the conversation page. The second virtual resource included in the second conversation message is generated based on the attribute representation of the target attribute item, which improves the resource distributing efficiency.

Exemplarily, the target attribute item may include an attribute item corresponding to at least one of the target interaction type, the associated theme, and the resource attribute corresponding to the virtual resource. Each attribute item may be associated with an attribute display area, and a corresponding attribute representation is displayed in the attribute display area.

Exemplarily, the attribute representation of the target attribute item includes an attribute identification of the target attribute item and/or a configured attribute value corresponding to the target attribute item. For example, the target preset attribute corresponding to the target attribute item includes the target interaction type, and the interaction type of the first virtual resource is an image type, then the attribute representation of the corresponding target attribute item may be an identification of an image-type resource, such as a text identification of a photo resource, or an icon identification of a photo resource. For another example, the target preset attribute corresponding to the target attribute item includes the resource attribute, which may specifically include the number of the virtual resources, such as 6.66, and may also include associated text information of the number of the virtual resources, the associated text information may be, for example, a blessing word.

Optionally, the configuration information of the second virtual resource may further include an unconfigured attribute item, that is, the unconfigured attribute item may also be displayed in the virtual resource setting page, such as the threshold number of users acquiring virtual resources, and the corresponding attribute representation, such as the number of users, may be configured by the current user.

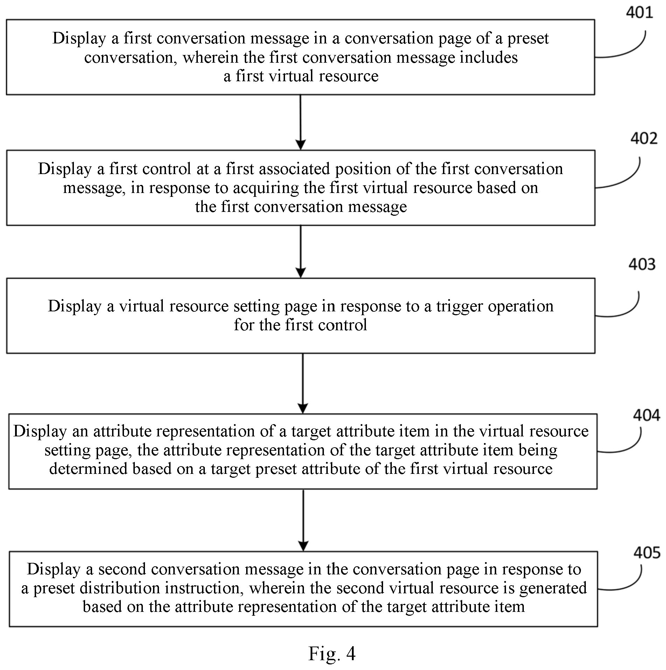

Fig. 4 is a schematic flowchart of another information display method provided in embodiments of the present disclosure. The embodiments of the present disclosure are optimized based on various optional solutions in the above embodiments. Specifically, the method includes the following steps:
Step 401: a first conversation message is displayed in a conversation page of a preset conversation, wherein the first conversation message includes a first virtual resource.

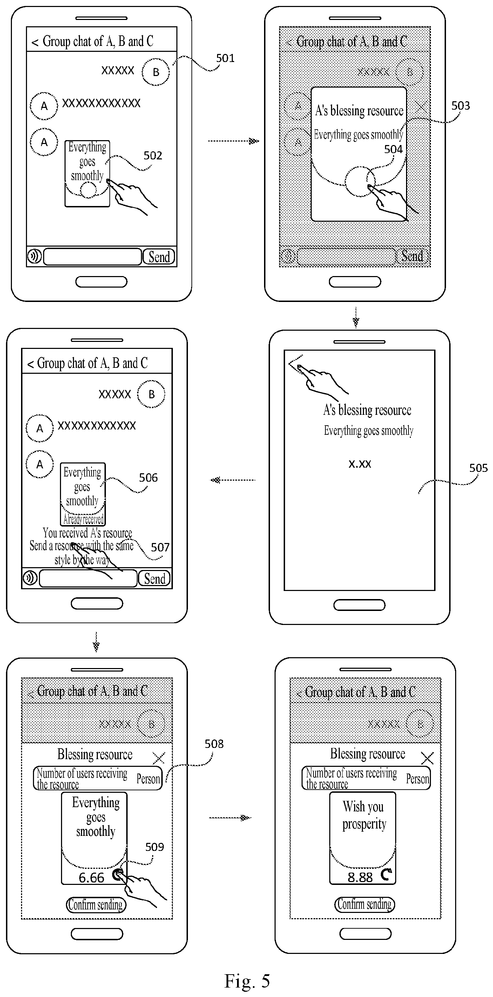

Fig. 5 is a schematic diagram of interface interaction of an information display method provided in embodiments of the present disclosure. As shown in Fig. 5, a first conversation message 502 including a blessing theme resource (abbreviated as a blessing resource) sent by user A is displayed in a conversation page 501 of a preset conversation.

Step 402: a first control is displayed at a first associated position of the first conversation message, in response to acquiring the first virtual resource based on the first conversation message.

Exemplarily, as shown in Fig. 5, in response to user B triggering the first conversation message 502, a virtual resource acquisition page 503 (a resource claiming page) is displayed, a preset control 504 is displayed in the virtual resource acquisition page 503, and user B claims the blessing resource by triggering the preset control 504, an acquisition result page 505 is displayed after the claim is successful, the conversation page is displayed in response to a return operation of the conversation page input by user B, a first conversation message 506 in which a state of the first virtual resource is changed is displayed in the conversation page, for example, the phrase "Already received" in the figure are added, and a first control 507 is displayed, as shown in the figure "You received the resource from A, send one with the same style by the way".

Step 403: a virtual resource setting page is displayed in response to a trigger operation for the first control.

As shown in Fig. 5, after user B clicks the first control 507, a virtual resource setting page 508 is displayed.

Step 404: an attribute representation of a target attribute item is displayed in the virtual resource setting page, wherein the attribute representation of the target attribute item is determined based on a target preset attribute of the first virtual resource.

Exemplarily, the attribute representation of the target attribute item is displayed in the virtual resource setting page, and display manners of different attribute items may be different. As shown in Fig. 5, the target attribute item may include an associated theme, a corresponding parameter identification is the blessing resource, the target attribute item may further include a blessing word and an amount, and corresponding configured attribute values are "Everything goes smoothly" and "6.66" respectively, and the target attribute item may further include an unconfigured attribute item, such as the number of users claiming the resource.

Optionally, the target attribute item includes a first attribute item and a second attribute item, the first attribute item is a configuration item with a fixed attribute value, such as an interaction type or an associated theme, and the second attribute item is a configuration item with a modifiable attribute value, such as the number of virtual resources. In this way, the flexibility of virtual resource setting may be improved.

As shown in Fig. 5, the associated theme is the first attribute item, and the blessing word and the amount are the second attribute items.

Optionally, after the attribute representation of the target attribute item is displayed in the virtual resource setting page, the method further includes: updating a configured attribute value of at least one target attribute item in response to a modification operation for the at least one target attribute item, wherein the second virtual resource is generated based on the updated configured attribute value. In this way, a user who currently needs to grant the virtual resource may customize the configured attribute value of the target attribute item, and the flexibility of virtual resource setting is further improved. The target attribute item may be at least one of the first attribute items mentioned above.

As shown in Fig. 5, an update control 509 is displayed in the virtual resource setting page, and the update control 509 may be triggered to modify the blessing word and the amount, for example, randomly change them to "May you be prosperous" and "8.88". Optionally, it may also be modified by manual input. Assuming that the number of users claiming the resource is the target attribute item and the configured parameter value is 2, user B may manually modify it to 3.

Step 405: displaying the second conversation message is displayed in the conversation page in response to a preset distribution instruction, wherein the second virtual resource is generated based on the attribute representation of the target attribute item.

Exemplarily, as shown in Fig. 5, after confirming that the resource setting is completed, the user may trigger a confirmation sending control to generate the preset distribution instruction, the second virtual resource is generated based on the attribute representation of the target attribute item, and the second conversation message including the second virtual resource is displayed in the conversation page.

Optionally, if the configuration information of the second virtual resource may further include the unconfigured attribute item, and the attribute representation configured by the current user is recorded as a custom attribute representation, the second virtual resource is generated based on the attribute representation of the target attribute item and the custom attribute representation.

According to the information display method provided in embodiments of the present disclosure, when there is a conversation message including a virtual resource in a conversation, the first control is displayed at an associated position of the conversation message, the virtual resource setting page may be triggered to be displayed by the target control, and the attribute representation of the target attribute item is displayed in the virtual resource setting page, wherein the attribute representation may reuse the target preset attribute of the virtual resource in the conversation message. After the attribute representation setting is completed, the corresponding virtual resource is generated based on the attribute representation, and the conversation message including the generated virtual resource is displayed, thereby improving the sending efficiency of the virtual resource, enriching interaction manners based on the virtual resource, and improving the interaction effect.

In some embodiments, the method further includes: displaying a second control at a second associated position of the first conversation message, wherein the second control is configured to trigger generation of a virtual resource template based on the first virtual resource, a target preset attribute of the virtual resource template is identical to the target preset attribute of the first virtual resource. In this way, the corresponding virtual resource template may be generated based on the virtual resource included in the conversation message, which facilitates the subsequent distribution of the virtual resource with the same style by using the virtual resource template, and further improves the distributing efficiency of the virtual resource.

Exemplarily, the second associated position may be a position associated with the display position of the first conversation message, for example, a distance between the second associated position and the display position of the first conversation message is less than a second preset distance threshold, wherein the second associated position may be a center position of a display area in which the second control is located, the display position of the first conversation message may be a center position of the display area in which the first conversation message is located, and the distance between the second associated position and the display position of the first conversation message may be a vertical distance in a preset direction (such as a horizontal direction, a vertical direction, or a linear connection direction, etc.). Specifically, the second associated position may be directly above the display area in which the first conversation message is located.

Optionally, in some embodiments, the method may further include: displaying the virtual resource setting page in response to a selection operation for the virtual resource template in a preset conversation page of a preset conversation, and displaying the attribute representation of the target attribute item in the virtual resource setting page, wherein the attribute representation of the target attribute item is determined based on the target preset attribute of the first virtual resource; and displaying a third conversation message in the preset conversation page in response to the preset distribution instruction, wherein the third conversation message includes a third virtual resource, and the third virtual resource is generated based on the attribute representation of the target attribute item. The preset conversation may be identical to or different from a preset conversation.

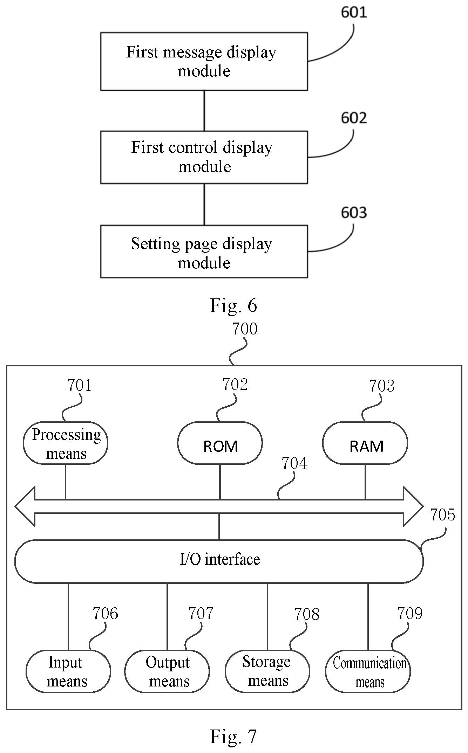

Fig. 6 is a schematic structural diagram of an information display apparatus provided in embodiments of the present disclosure. As shown in Fig. 6, the apparatus includes:
a first message display module 601, configured to display a first conversation message in a conversation page of a preset conversation, wherein the first conversation message includes a first virtual resource;
a first control display module 602, configured to display a first control at a first associated position of the first conversation message, wherein the first control is configured to trigger sending of a second conversation message in the preset conversation, the second conversation message includes a second virtual resource, a target preset attribute of the second virtual resource is identical to a target preset attribute of the first virtual resource, the target preset attribute includes a target interaction type corresponding to a virtual resource, and the target interaction type is associated with an acquisition mode of the corresponding virtual resource; and
a setting page display module 603, configured to display a virtual resource setting page in response to a trigger operation for the first control, wherein the virtual resource setting page is configured to display configuration information of the second virtual resource corresponding to the target preset attribute.

According to the information display apparatus provided in embodiments of the present disclosure, when there is a conversation message including a virtual resource in a conversation, the first control is displayed at an associated position of the conversation message, and the virtual resource setting page that is configured to display the configuration information of the second virtual resource corresponding to the target preset attribute may be triggered by the first control to be displayed, and a new conversation message including a new virtual resource having the same target preset attribute as the virtual resource may also be triggered to be sent, thereby improving the sending efficiency of the virtual resource, enriching interaction manners based on the virtual resource, and improving the interaction effect.

Optionally, the target preset attribute further includes at least one of an associated theme and a resource attribute corresponding to the virtual resource.

Optionally, the interaction type includes at least one of a password type, an image type, and a control trigger type, an acquisition mode associated with the password type includes inputting password information, an acquisition mode associated with the image type includes inputting an image, an acquisition mode of the control trigger type includes triggering a control, and a type of the password information includes a text information type and/or a voice information type.

Optionally, the resource attribute includes at least one of the number of the virtual resources, a threshold number of users acquiring virtual resources, and an associated image of the virtual resources.

Optionally, the acquisition mode is associated with an acquisition condition, wherein the acquisition condition corresponding to the password type includes that input target password information matches preset password information; and/or, the acquisition condition corresponding to the image type includes that an input target image satisfies at least one of the following: a target condition, an associated preset theme, and inclusion of a target material.

Optionally, the displaying a first control at a first associated position of the first conversation message includes: displaying the first control at the first associated position of the first conversation message, in response to successfully acquiring the first virtual resource based on the first conversation message.

Optionally, the configuration information of the second virtual resource includes an attribute representation of a target attribute item, and the apparatus further includes:
an attribute representation display module, configured to display the attribute representation of the target attribute item in the virtual resource setting page, wherein the attribute representation of the target attribute item is determined based on the target preset attribute of the first virtual resource; and
a second message display module, configured to display the second conversation message in the conversation page in response to a preset distribution instruction, wherein the second virtual resource is generated based on the attribute representation of the target attribute item.

Optionally, the attribute representation of the target attribute item includes an attribute identification of the target attribute item and/or a configured attribute value corresponding to the target attribute item.

Optionally, the apparatus further includes:
a parameter value modification module, configured to update a configured attribute value of at least one target attribute item in response to a modification operation for the at least one target attribute item, wherein the second virtual resource is generated based on the updated configured attribute value.

Optionally, the apparatus further includes:
a second control display module, configured to display a second control at a second associated position of the first conversation message, wherein the second control is configured to trigger generation of a virtual resource template based on the first virtual resource, a target preset attribute of the virtual resource template is identical to the target preset attribute of the first virtual resource.

Optionally, a sending user of the first conversation message is identical to or different from a sending user of the second conversation message.

The information display apparatus provided in embodiments of the present disclosure may perform the information display method provided in any embodiment of the present disclosure, and has function modules and beneficial effects corresponding to the method performed.

It is worth noting that the units and modules included in the above apparatus are only divided according to functional logic, but are not limited to the above division, as long as the corresponding functions may be implemented. In addition, the specific names of the functional units are only for the convenience of distinguishing from each other, and are not used to limit the protection scope of embodiments of the present disclosure.

Fig. 7 is a schematic diagram of a structure of an electronic device provided in embodiments of the present disclosure. Reference is made to Fig. 7 below, which illustrates a schematic structural diagram of an electronic device (e.g., a terminal device or a server in Fig. 7) 700 suitable for implementing embodiments of the present disclosure. The terminal device in embodiments of the present disclosure may include, but is not limited to, mobile terminals, such as a mobile phone, a notebook computer, a digital broadcast receiver, a personal digital assistant (PDA), a tablet computer, a portable media player (PMP), and a vehicle-mounted terminal (such as a vehicle navigation terminal), and fixed terminals, such as a digital TV and a desktop computer. The electronic device shown in Fig. 7 is only an example, and should not impose any limitation on the function and scope of use of embodiments of the present disclosure.

As shown in Fig. 7, the electronic device 700 may include a processing means (e.g., a central processing unit, a graphics processor, etc.) 701, which may perform various appropriate actions and processing based on a program stored in a read-only memory (ROM) 702 or a program loaded from a storage means 708 into a random-access memory (RAM) 703. The RAM 703 further stores various programs and data required for operations of the electronic device 700. The processing means 701, the ROM 702, and the RAM 703 are interconnected by means of a bus 704. An editing/output (I/O) interface 705 is also connected to the bus 704.

Typically, the following means may be connected to the I/O interface 705: an input means 706 including, for example, a touch screen, a touchpad, a keyboard, a mouse, a camera, a microphone, an accelerometer, and a gyroscope; an output means 707 including, for example, a liquid crystal display (LCD), a speaker, and a vibrator; a storage means 708 including, for example, a magnetic tape and a hard disk; and a communication means 709. The communication means 709 may allow the electronic device 700 to perform wireless or wired communication with other devices to exchange data. Although Fig. 7 shows the electronic device 700 having various means, it should be understood that it is not required to implement or provide all of the illustrated means. Alternatively, more or fewer means may be implemented or provided.

In particular, according to embodiments of the present disclosure, the process described above with reference to the flowcharts may be implemented as a computer software program. For example, embodiments of the present disclosure include a computer program product, which includes a computer program carried by a non-transitory computer-readable medium, where the computer program includes program code for performing the method shown in the flowchart. In such an embodiment, the computer program may be downloaded and installed from a network via the communication means 709, or installed from the storage means 708, or installed from the ROM 702. When the computer program is executed by the processing means 701, the functions defined in the method of the embodiments of the present disclosure are executed.

The names of messages or information exchanged between a plurality of means in the implementations of the present disclosure are only for illustrative purposes, and are not intended to limit the scope of these messages or information.

The electronic device provided in this embodiment of the present disclosure belongs to the same inventive concept as the information display method provided in the above embodiments. For technical details not described in detail in this embodiment, reference may be made to the above embodiments, and this embodiment has the same beneficial effects as the above embodiments.

Embodiments of the present disclosure provide a computer storage medium having a computer program stored thereon, wherein the information display method provided in the above embodiments is implemented when the program is executed by a processor.

Embodiments of the present disclosure provide a computer program product, including a computer program, wherein the information display method provided in the above embodiments is implemented when the program is executed by a processor.

It should be noted that the above computer-readable medium in the present disclosure may be a computer-readable signal medium or a computer-readable storage medium or any combination thereof. The computer-readable storage medium may be, for example, but not limited to, an electronic, magnetic, optical, electromagnetic, infrared, or semiconductor system, apparatus, or device, or any combination of the above. More specific examples of the computer-readable storage medium may include, but are not limited to: an electrically connected portable computer disk having one or more wires, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination of the above. In the present disclosure, a computer-readable storage medium may be any tangible medium that contains or stores a program, which may be used by or in connection with an instruction execution system, apparatus, or device. In the present disclosure, a computer-readable signal medium may include a data signal propagated on a baseband or as a part of a carrier wave, and computer-readable program code is carried therein. This propagated data signal may take a variety of forms, including but not limited to an electromagnetic signal, an optical signal, or any suitable combination of the above. The computer-readable signal medium may also be any computer-readable medium other than the computer-readable storage medium, and the computer-readable signal medium may send, propagate, or transmit a program for use by or in connection with an instruction execution system, apparatus, or device. The program code contained on the computer-readable medium may be transmitted by any suitable medium, including but not limited to: a wire, an optical cable, a radio frequency (RF), etc., or any suitable combination of the above.

The above computer-readable medium may be included in the above electronic device or may exist alone without being assembled into the electronic device.

The above computer-readable medium carries one or more programs, which, when executed by the electronic device, cause the electronic device to: display a first conversation message in a conversation page of a preset conversation, wherein the first conversation message includes a first virtual resource; display a first control at a first associated position of the first conversation message, wherein the first control is configured to trigger sending of a second conversation message in the preset conversation, the second conversation message includes a second virtual resource, a target preset attribute of the second virtual resource is identical to a target preset attribute of the first virtual resource, the target preset attribute includes a target interaction type corresponding to a virtual resource, and the target interaction type is associated with an acquisition mode of the corresponding virtual resource; and display a virtual resource setting page in response to a trigger operation for the first control, wherein the virtual resource setting page is configured to display configuration information of the second virtual resource corresponding to the target preset attribute.

The computer program code for performing the operations of the present disclosure may be written in one or more programming languages or a combination thereof, the programming languages including but not limited to object-oriented programming languages, such as Java, Smalltalk, and C++, and further including conventional procedural programming languages, such as "C" language or similar programming languages. The program code may be executed entirely on a user's computer, partly on the user's computer, as a stand-alone software package, partly on the user's computer and partly on a remote computer, or entirely on the remote computer or server. In the case of the remote computer, the remote computer may be connected to the user's computer through any kind of network, including a local area network (LAN) or a wide area network (WAN), or it may be connected to an external computer (for example, via the Internet using an Internet service provider).

The flowcharts and block diagrams in the drawings illustrate the possibly implemented architectures, functions, and operations of the system, method, and computer program product according to various embodiments of the present disclosure. In this regard, each block in the flowchart or block diagram may represent a module, program segment, or part of code, which contains one or more executable instructions for implementing the specified logical functions. It should also be noted that, in some alternative implementations, the functions marked in the blocks may also occur in an order different from that marked in the drawings. For example, two blocks shown in succession may actually be performed substantially in parallel, or they may sometimes be performed in the reverse order, depending on the functions involved. It should also be noted that each block in the block diagram and/or the flowchart, and a combination of the blocks in the block diagram and/or the flowchart may be implemented by a dedicated hardware-based system that executes specified functions or operations, or may be implemented by a combination of dedicated hardware and computer instructions.

The units involved in the embodiments of the present disclosure may be implemented by software or hardware. The name of a module does not constitute a limitation on the module itself under certain circumstances, for example, the first message display module may also be described as "a module for displaying a first conversation message in a conversation page of a preset conversation, wherein the first conversation message includes a first virtual resource".

The functions described above herein may be performed at least partially by one or more hardware logic components. For example, without limitation, exemplary types of hardware logic components that may be used include: a field programmable gate array (FPGA), an application specific integrated circuit (ASIC), an application specific standard product (ASSP), a system on chip (SOC), a complex programmable logical device (CPLD), etc.

In the context of the present disclosure, a machine-readable medium may be a tangible medium that may contain or store a program for use by or in connection with an instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination of the above. More specific examples of the machine-readable storage medium would include an electrical connection based on one or more wires, a portable computer disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination of the above.

According to one or more embodiments of the present disclosure, provided is an information display method, including:
displaying a first conversation message in a conversation page of a preset conversation, wherein the first conversation message includes a first virtual resource;
displaying a first control at a first associated position of the first conversation message, wherein the first control is configured to trigger sending of a second conversation message in the preset conversation, the second conversation message includes a second virtual resource, a target preset attribute of the second virtual resource is identical to a target preset attribute of the first virtual resource, the target preset attribute includes a target interaction type corresponding to a virtual resource, and the target interaction type is associated with an acquisition mode of the corresponding virtual resource; and
displaying a virtual resource setting page in response to a trigger operation for the first control, wherein the virtual resource setting page is configured to display configuration information of the second virtual resource corresponding to the target preset attribute.

According to one or more embodiments of the present disclosure, the target preset attribute further includes at least one of an associated theme and a resource attribute corresponding to the virtual resource.

According to one or more embodiments of the present disclosure, the interaction type includes at least one of a password type, an image type, and a control trigger type, an acquisition mode associated with the password type includes inputting password information, an acquisition mode associated with the image type includes inputting an image, an acquisition mode of the control trigger type includes triggering a control, and a type of the password information includes a text information type and/or a voice information type.

According to one or more embodiments of the present disclosure, the resource attribute includes at least one of the number of the virtual resources, a threshold number of users acquiring virtual resources, and an associated image of the virtual resources.

According to one or more embodiments of the present disclosure, the acquisition mode is associated with an acquisition condition, wherein the acquisition condition corresponding to the password type includes that input target password information matches preset password information; and/or, the acquisition condition corresponding to the image type includes that an input target image satisfies at least one of the following: a target condition, an associated preset theme, and inclusion of a target material.

According to one or more embodiments of the present disclosure, the displaying a first control at a first associated position of the first conversation message includes:
displaying the first control at the first associated position of the first conversation message, in response to successfully acquiring the first virtual resource based on the first conversation message.

According to one or more embodiments of the present disclosure, the configuration information of the second virtual resource includes an attribute representation of a target attribute item, and the method further includes:
displaying the attribute representation of the target attribute item in the virtual resource setting page, wherein the attribute representation of the target attribute item is determined based on the target preset attribute of the first virtual resource; and
displaying the second conversation message in the conversation page in response to a preset distribution instruction, wherein the second virtual resource is generated based on the attribute representation of the target attribute item.

According to one or more embodiments of the present disclosure, the attribute representation of the target attribute item includes an attribute identification of the target attribute item and/or a configured attribute value corresponding to the target attribute item.

According to one or more embodiments of the present disclosure, the method further includes:
updating a configured attribute value of at least one target attribute item in response to a modification operation for the at least one target attribute item, wherein the second virtual resource is generated based on the updated configured attribute value.

According to one or more embodiments of the present disclosure, the method further includes:
displaying a second control at a second associated position of the first conversation message, wherein the second control is configured to trigger generation of a virtual resource template based on the first virtual resource, a target preset attribute of the virtual resource template is identical to the target preset attribute of the first virtual resource.

According to one or more embodiments of the present disclosure, a sending user of the first conversation message is identical to or different from a sending user of the second conversation message.

According to one or more embodiments of the present disclosure, provided is an information display apparatus, including:
a first message display module, configured to display a first conversation message in a conversation page of a preset conversation, wherein the first conversation message includes a first virtual resource;
a first control display module, configured to display a first control at a first associated position of the first conversation message, wherein the first control is configured to trigger sending of a second conversation message in the preset conversation, the second conversation message includes a second virtual resource, a target preset attribute of the second virtual resource is identical to a target preset attribute of the first virtual resource, the target preset attribute includes a target interaction type corresponding to a virtual resource, and the target interaction type is associated with an acquisition mode of the corresponding virtual resource; and
a setting page display module, configured to display a virtual resource setting page in response to a trigger operation for the first control, wherein the virtual resource setting page is configured to display configuration information of the second virtual resource corresponding to the target preset attribute.

According to one or more embodiments of the present disclosure, provided is an electronic device, the electronic device includes:
one or more processors; and
a storage, configured to store one or more programs,
wherein the one or more programs, when executed by the one or more processors, cause the one or more processors to implement the information display method provided in embodiments of the present disclosure.

According to one or more embodiments of the present disclosure, provided is a storage medium including computer-executable instructions, the computer-executable instructions, when executed by a computer processor, are configured to perform the information display method provided in embodiments of the present disclosure.

The above description is only preferred embodiments of the present disclosure and an explanation of the technical principles employed. Those skilled in the art should understand that the scope of disclosure involved in the present disclosure is not limited to the technical solutions formed by the specific combination of the above technical features, and should also cover, without departing from the above disclosed concept, other technical solutions formed by any combination of the above technical features or their equivalent features. For example, a technical solution formed by replacing the above features with technical features with similar functions disclosed in the present disclosure (but not limited to).

Additionally, although operations are depicted in a particular order, it should not be understood that these operations are required to be performed in the particular order shown or in a sequential order. Under certain circumstances, multitasking and parallel processing may be advantageous. Likewise, although several specific implementation details are included in the above discussion, these should not be construed as limiting the scope of the present disclosure. Certain features that are described in the context of separate embodiments may also be implemented in combination in a single embodiment. Conversely, various features described in the context of a single embodiment may also be implemented in multiple embodiments individually or in any suitable sub-combination.

Although the subject matter has been described in language specific to structural features and/or logical actions of the method, it should be understood that the subject matter defined in the appended claims is not necessarily limited to the specific features or actions described above. On the contrary, the specific features and actions described above are only example forms for implementing the claims.

## Claims

1. An information display method, comprising:
displaying a first conversation message in a conversation page of a preset conversation, wherein the first conversation message comprises a first virtual resource;
displaying a first control at a first associated position of the first conversation message, wherein the first control is configured to trigger sending of a second conversation message in the preset conversation, the second conversation message comprises a second virtual resource, a target preset attribute of the second virtual resource is identical to a target preset attribute of the first virtual resource, the target preset attribute comprises a target interaction type corresponding to a virtual resource, and the target interaction type is associated with an acquisition mode of the corresponding virtual resource; and
displaying a virtual resource setting page in response to a trigger operation for the first control, the virtual resource setting page being configured to display configuration information of the second virtual resource corresponding to the target preset attribute.

2. The method of claim 1, wherein the target preset attribute further comprises at least one of an associated theme and a resource attribute corresponding to the virtual resource.

3. The method of claim 2, wherein the interaction type comprises at least one of a password type, an image type, and a control trigger type, an acquisition mode associated with the password type comprises inputting password information, an acquisition mode associated with the image type comprises inputting an image, an acquisition mode of the control trigger type comprises triggering a control, and a type of the password information comprises at least one of a text information type and a voice information type.

4. The method of claim 2, wherein the resource attribute comprises at least one of a number of the virtual resources, a threshold number of users acquiring virtual resources, and an associated image of the virtual resources.

5. The method of claim 3, wherein the acquisition mode is associated with an acquisition condition, and the acquisition condition comprises at least one of:
an acquisition condition corresponding to the password type, the acquisition condition corresponding to the password type comprising that input target password information matches preset password information; and
an acquisition condition corresponding to the image type, the acquisition condition corresponding to the image type comprising that an input target image satisfies at least one of a target condition, an associated preset theme, and comprisal of a target material.

6. The method of any of claims 1 to 5, wherein displaying the first control at the first associated position of the first conversation message comprises:
displaying the first control at the first associated position of the first conversation message, in response to successfully acquiring the first virtual resource based on the first conversation message.

7. The method of any of claims 1 to 5, wherein the configuration information of the second virtual resource comprises an attribute representation of a target attribute item, and the method further comprises:
displaying the attribute representation of the target attribute item in the virtual resource setting page, the attribute representation of the target attribute item being determined based on the target preset attribute of the first virtual resource; and
displaying the second conversation message in the conversation page in response to a preset distribution instruction, wherein the second virtual resource is generated based on the attribute representation of the target attribute item.

8. The method of claim 7, wherein the attribute representation of the target attribute item comprises at least one of: an attribute identification of the target attribute item; and a configured attribute value corresponding to the target attribute item.

9. The method of claim 8, further comprising:
updating a configured attribute value of at least one target attribute item in response to a modification operation for the at least one target attribute item, wherein the second virtual resource is generated based on the updated configured attribute value.

10. The method of claim 1, further comprising:
displaying a second control at a second associated position of the first conversation message, wherein the second control is configured to trigger generation of a virtual resource template based on the first virtual resource, a target preset attribute of the virtual resource template is identical to the target preset attribute of the first virtual resource.

11. The method of claim 1, wherein a sending user of the first conversation message is identical to or different from a sending user of the second conversation message.

12. An information display apparatus, comprising:
a first message display module, configured to display a first conversation message in a conversation page of a preset conversation, wherein the first conversation message comprises a first virtual resource;
a first control display module, configured to display a first control at a first associated position of the first conversation message, wherein the first control is configured to trigger sending of a second conversation message in the preset conversation, the second conversation message comprises a second virtual resource, a target preset attribute of the second virtual resource is identical to a target preset attribute of the first virtual resource, the target preset attribute comprises a target interaction type corresponding to a virtual resource, and the target interaction type is associated with an acquisition mode of the corresponding virtual resource; and
a setting page display module, configured to display a virtual resource setting page in response to a trigger operation for the first control, the virtual resource setting page being configured to display configuration information of the second virtual resource corresponding to the target preset attribute.

13. An electronic device, comprising:
one or more processors; and
a storage, configured to store one or more programs,
wherein the one or more programs, when executed by the one or more processors, cause the one or more processors to implement the information display method of any of claims 1 to 11.

14. A storage medium comprising computer-executable instructions that, when executed by a computer processor, are configured to perform the information display method of any of claims 1 to 11.
